# EUROPÄISCHE PATENTSCHRIFT

(11) **EP 1 253 094 B1**
(45) Veröffentlichungstag und Bekanntmachung des Hinweises auf die Patenterteilung: **15.10.2008**
(21) Anmeldenummer: 02009060.1
(22) Anmeldetag: 23.04.2002
(51) Int. Cl.: B65G 53/60

(54) **Müllentsorgungsanlage für Nassmüll, insbesondere für Abfälle von Grossküchen**
Waste disposal device for wet wastes, in particular for wastes from large-scale kitchens
Installation d'élimination de déchets humides, notamment de déchets de cuisines de collectivités

(30) Priorität: 23.04.2001 DE 20106954 U
(43) Veröffentlichungstag der Anmeldung: 30.10.2002
(73) Patentinhaber: MEIKO Maschinenbau GmbH & Co., 77610 Offenburg (DE)
(72) Erfinder: Klem, Peter, 77694 Kehl-Marlen (DE); Otschik, Joachim, Dr. Ing.habil., 63741 Aschaffenburg (DE); Fossen, Bjorn, 3820 Nordagutu (NO)
(74) Vertreter: Baumann, Eduard K.

(56) Entgegenhaltungen:
- EP-B- 0 204 879
- DE-U- 20 106 954
- DE-U- 29 917 059
- US-A- 5 897 775

## Beschreibung

Die Erfindung bezieht sich auf eine Müllentsorgungsanlage für Nassmüll gemäß dem Oberbegriff des Anspruches 1.

Derartige Müllentsorgungsanlagen werden in Großküchen aller Art, beispielsweise Betriebskantinen, eingesetzt.

Eine derartige Müllentsorgungsanlage 1 ist im DE-U- 299 17059 beschrieben.

Die EP-B-0204879 beschreibt eine ähnliche Müllentsorgungsanlage mit einem siebartigen Auffangtrichter für den Nassmüll.

Der Erfindung liegt die Aufgabe zugrunde, eine Müllentsorgungsanlage so auszugestalten, dass der Flüssigkeitsanteil des Nassmülles im Festanteil des weiter zu verarbeitenden Nassmülles deutlich reduziert wird.

Insbesondere sollen nach der Zufuhr des Nassmülls von dezentralen Aufgabestationen in eine zentrale Austragsvorrichtung innerhalb dieser Austragsvorrichtung Entwässerungseinrichtungen vorgesehen werden, bevor oder ohne dass der Nassmüll zerkleinert und/oder in nachgeschalteten Entwässerungspressen, wie Schneckenpressen, entwässert worden wäre.

Die Aufgabe wird erfindungsgemäß durch die Merkmale des Anspruches 1 gelöst. Weitere Ausgestaltungen der Erfindung sind in den Unteransprüchen unter Schutz gestellt.

Beim Schutzgegenstand ist im Gehäuse der Austragsvorrichtung ein siebartiger; konischer, als Sieb ausgebildeter vertikaler Auffangtrichter vorgesehen. Die Einströmung von Luft in die Austragsvorrichtung erfolgt tangential. Dadurch rotiert die Luft zusammen mit dem Nassmüll im Sieb-artigen vertikalen Auffangtrichter. Der entwässerte feste Müll fällt nach unten. In einem an den Auffangtrichter angrenzenden äusseren Auffangbereich des Gehäuses wird der Großteil der Flüssigkeit unmittelbar abgeführt, sei es infolge Druckluft von oben in den Auffangtrichter hinein, wobei die Druckluft von einem Druckluftkompressor geliefert wird, oder durch einen im Außenbereich des Auffangtrichters über eine Vakuumpumpe erzeugten Unterdruck, oder einfach durch Ablaufen der Flüssigkeit aufgrund der Schwerkraft.

Der Transport des Nassmülls erfolgt portionsweise von den Aufgabestationen zur zentralen Austragsvorrichtung, gleichermaßen wird die aufgefangene Flüssigkeit vom Aussenbereich des Auffangtrichters, der vorzugsweise eine Auffangwanne aufweist, über eine Flüssigkeitsableitung und eine ventilgesteuerte Zwischenschleuse portionsweise in Intervallen abgesaugt und der Kanalisation oder dergleichen zugeführt.

Ebenfalls in einzelnen Portionen, von Hand oder zyklisch gesteuert, wird der vorentwäserte Müll durch den offenen Boden des Auffangtrichters hindurch nach unten in eine Schleusenkammer abgeführt, die durch einen oberen und einen unteren Schieber gesteuert verschließbar und zu öffnen ist, und von da zu einer Leitung für die weitere Verarbeitung. Von da kann der Müll zu einer Zerkleinerungsanlage und/oder eine zusätzliche Rest-Entwässerungspresse wie eine Entwässerungsschnecke geführt werden, und von da in ein Speiserestsilo, wobei die austretende Restflüssigkeit über eine weitere Entwässerungsleitung der Kanalisation zugeführt werden kann.

Der Auffangtrichter kann vorzugsweise über eine abgedichtete seitliche entfernbare Seitenwand der Austragsvorrichtung leicht ausgewechselt und wieder präzise justiert eingebaut sowie durch leicht lösbare Klemmen festgehalten werden. Im Auffangtrichter können Filter, Siebe oder Spaltfilter oder dergleichen angeordnet werden, um eine Feinabstimmung zum jeweiligen Nassmüll zu ermöglichen.
Sowohl der Auffangtrichter als auch die gesamte Kammer der Austragsvorrichtung können durch oben angeordnete Reinigungsdüsen in einfacher Weise, beispielsweise auch automatisch, gereinigt werden.

Die Aufgabestationen sind zweckmäßigerweise ebenfalls trichterförmig ausgebildet. Vorzugsweise weisen sie einen horizontalen oder flacheren äusseren Siebring, etwa mit einem Winkelbereich zwischen 15 und 25°, zur Horizontalen nach innen und unten zu, und einen nach innen anschließenden steileren Auffangtrichter mit einem Winkel von etwa 40 bis 65°, vorzugsweise 50 bis 60° in Bezug zur Horizontale auf. Bei einem bevorzugten Ausführungsbeispiel besteht der Auffangtrichter aus einem zur Horizontale flacheren oberen Trichterabschnitt mit einem Winkel von etwa 40 bis 50°, und einem daran anschließenden unteren Trichterabschnitt mit einem Winkel von etwa 70 bis 80° zur Horizontalen. Durch die Wahl dieser Winkel kann auf eine Nass-Spülvorrichtung verzichtet werden, der Nassmüll, wie er in Großküchen anfällt, fällt dadurch von selbst automatisch in das anschließende zentrale Transportrohr. Dieses wird in Intervallen geöffnet und, unter Unterdruck stehend, wird der angehäufte Nassmüll zur zentralen Austragsvorrichtung transportiert. Statt einer Vakuumanlage und Unterdruck ist auch eine Druckluftanlage einsetzbar, welche im Prinzip in gleicher Weise arbeitet, wobei der Nassmüll von den einzelnen Aufgabestationen in den oberen Bereich des Auffangtrichters der Austragsvorrichtung gedrückt wird.

Der äussere obere Siebring liegt in einer Entwässerungsrinne leicht lösbar auf, die über eine Verbindungsleitung mit einer Abwasserleitung verbunden ist.

Ausführungsbeispiele der Erfindung sind in der Zeichnung dargestellt. Es zeigt:
Figur 1 ein Gesamtschema einer Müllentsorgungsanlage für Nassmüll,
Figur 2 eine perspektivische Ansicht auf eine geschlossene Austragsvorrichtung,
Figur 3 die Ansicht von Figur 2 mit abgenommener Seitenwand, wobei der Auffangtrichter im eingebauten Zustand sichtbar ist, Figur 4 einen Blick auf das Gehäuse der Austragsvorrichtung bei herausgenommenen Auffangtrichter,
Figur 5 eine perspektivische Darstellung des herausgenommenen Auffangtrichters,
Figur 6 einen Querschnitt durch den Auffangtrichter,
Figur 7 eine perspektivische Ansicht auf untere Teile der Müllentsorgungsanlage, insbesondere die Ableitung der Entwässerungs-Flüssigkeit,
Figur 8 eine Übersichtszeichnung einer Aufgabestation mit einem bestimmten Auffantrichter,
Figur 9 einen Querschnitt durch einen anders gestalteten Auffangtrichter der Aufgabestation,
Figur 10 eine perspektivische Draufsicht auf einen Auffangtrichter mit herausnehmbarem Siebring,
Figur 11 die Darstellung von Figur 10 mit teilweise herausgenommenen Siebring und sichtbarer Entwässerungsrinne mit Entwässerung.

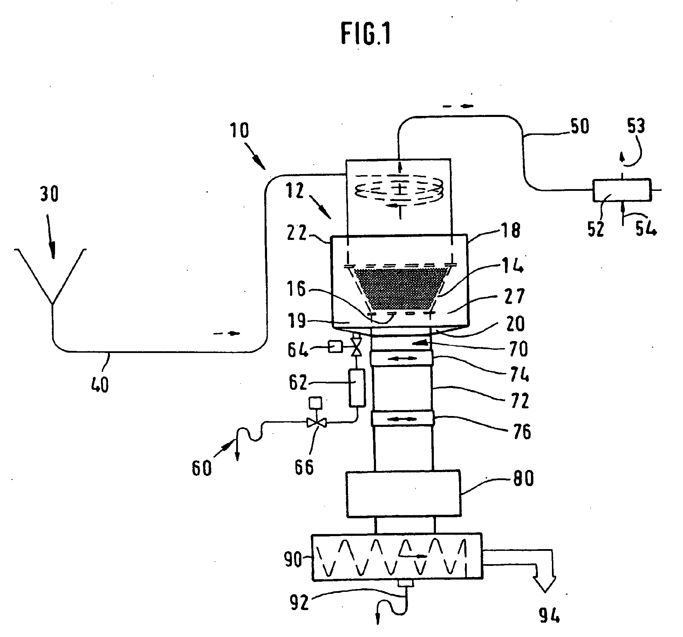

In der Zeichnung sind gleiche Teile mit gleichen Bezugszeichen versehen. Die Müllentsorgungsanlage für Nassmüll in Fig. 1 ist allgemein mit 10 bezeichnet, die Austragsvorrichtung allgemein mit 12, der Auffangtrichter allgemein mit 14.

Die Flüssigkeitsableitung ist allgemein mit 60 bezeichnet, die Austragsleitung für die entwässerten festen Teile mit 70, der nachfolgende Zerkleinerer mit 80, die daran anschließende Entwässerungspresse mit 90.

Die Aufgabestation ist allgemein mit 30 bezeichnet, das Transportrohr von der Aufgabestation 30 zur Austragsvorrichtung 12 ist mit 40 bezeichnet, die Evakuierleitung oder Druckleitung zwischen Austragsvorrichtung 12 und Druckkompressor oder Vakuumpumpe 52 ist mit 50 bezeichnet, die Rückleitung der Transportluft zur Abluftleitung 53 ist mit 54 bezeichnet.

Das Gehäuse der Austragsvorrichtung 12 ist mit 18 bezeichnet, der äussere Auffangbereich für Flüssigkeit desselben mit 19, die leicht lösbare Seitenwand mit 22, der offene Boden des Auffangtrichters 14 mit 16, die untere am Boden angeordnete Auffangwanne des Gehäuses 18 für die Flüssigkeit mit 20.

Von der Auffangwanne 20 geht die allgemein mit 60 bezeichnete Flüssigkeitsableitung weg, die über ein oberes Steuerventil 64 und ein unteres Steuerventil 66 über eine Zwischen-Schleusenkammer 62 eine intervallmäßige Entwässerung in die Kanalisation etc. ermöglicht.

Nach der steuerbaren zyklischen Entwässerung des von oben in den Auffangtrichter 14 gelangenden Nassmülls wird dieser zyklisch über eine an den offenen Boden 16 anschließende Austragsleitung 70 einem Speiserestesilo zugeführt, und zwar über den offenen Boden 16 des Auffangtrichters 14, einen oberen steuerbaren Schieber 74 und einen unteren steuerbaren Schieber 76, welche eine Schleusenkammer 72 steuern, nämlich öffnen und verschließen.

Daran anschließend kann der weitgehend entwässerte Nassmüll einem Zerkleinerer 80, und von da einer üblichen Entwässerungspresse, hier in Form einer Schneckenpresse 90, zugeführt werden. Der nochmals getrocknete Müll geht dann über eine Leitung 94 in ein Speiserestesilo, wo er weiter verarbeitet beziehungsweise abgeführt wird. Aus der Entwässerungspresse 90 führt eine weitere Entwässerungsleitung 92 beispielsweise zum Abwasserkanal.

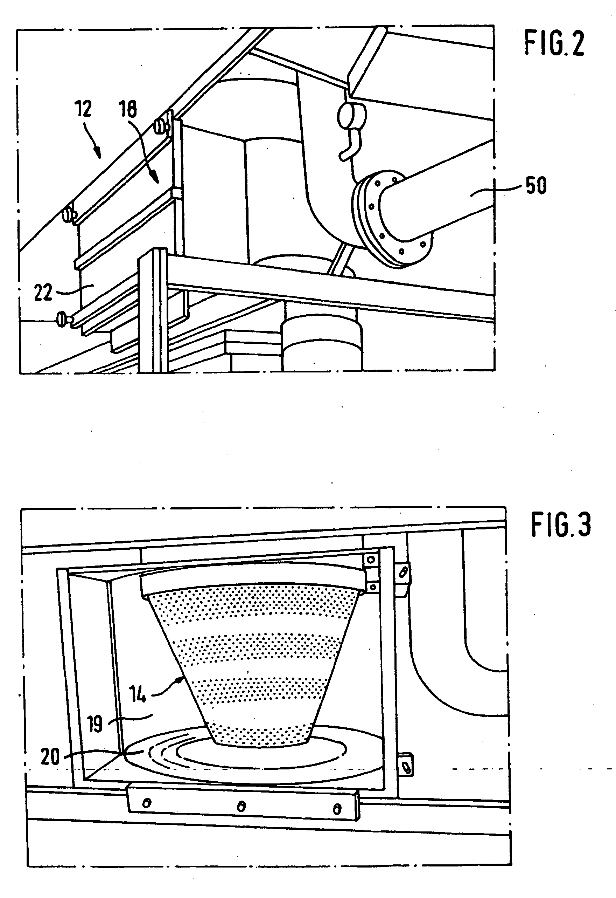

Figur 2 zeigt im wesentlichen das geschlossene Gehäuse 18 der Austragsvorrichtung 12 einschließlich der Seitenwand 22 und darüberhinaus die Druckleitung oder Evakuierleitung 50.

Figur 3 zeigt den Auffangtrichter 14 nach Entfernung der Seitenwand 22 sowie den äusseren Auffangbereich 19 und die Auffangwanne 20.

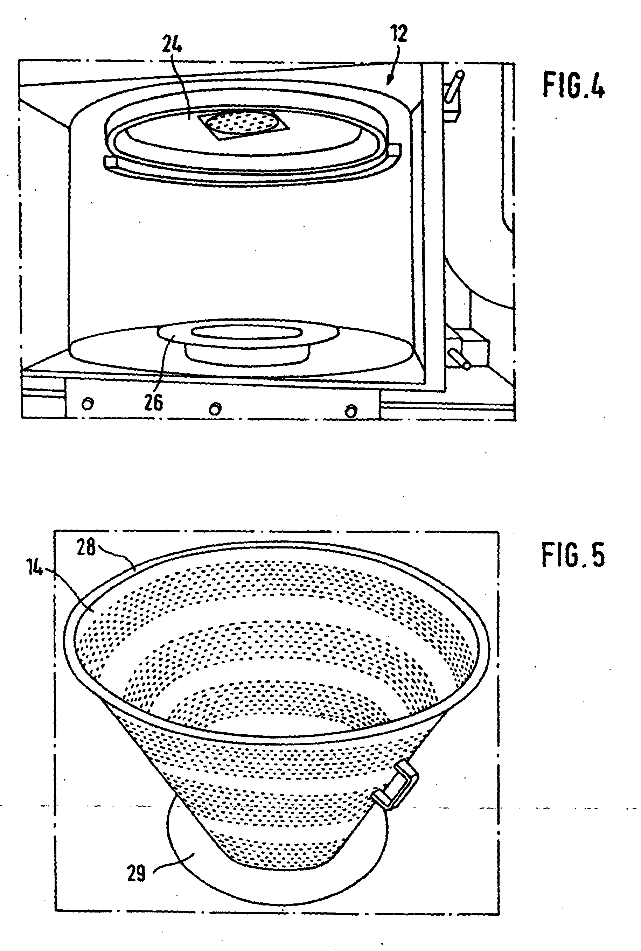

Figur 4 zeigt die Austragsvorrichtung 12 nach Entfernung des Auffangtrichters 14 und insbesondere die obere Einpassvorrichtung 24 sowie die untere scheibenförmige Einpassvorrichtung 26 für den Auffangtrichter 14.

Figur 5 zeigt den Auffangtrichter 14 mit dem oberen Passring 28 und dem unteren scheibenförmigen Passring 29 für das Einpassen des Auffangtrichters 14 in das Gehäuse 18 der Austragsvorrichtung 12.

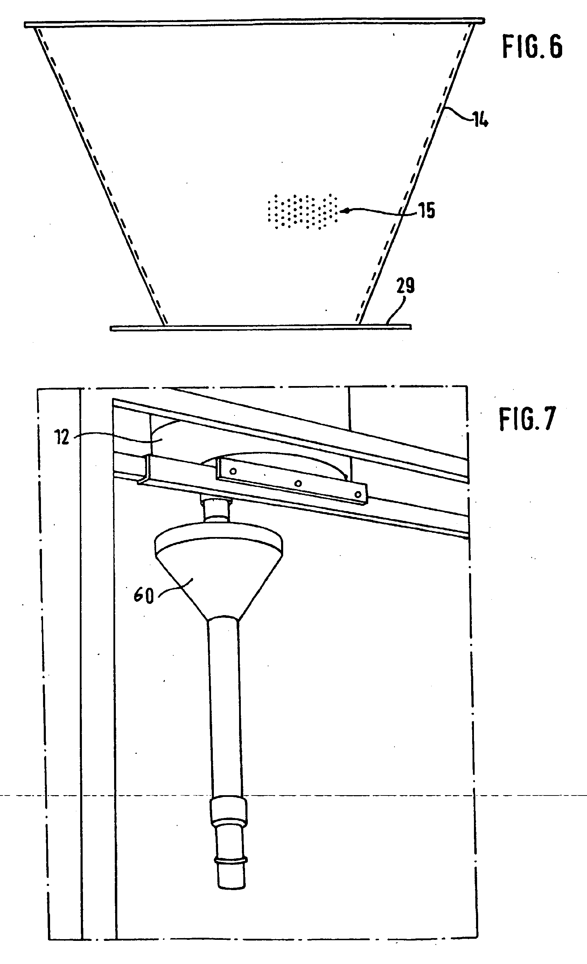

Figur 6 zeigt einen Querschnitt des siebförmigen Auffangtrichters 14 mit regelmäßig um den Umfang verteilten Sieböffnungen 15 und den unteren Passring 29,

Figur 7 zeigt perspektivisch oben andeutungsweise das runde Gehäuse der Austragsvorrichtung 12 und darunter seitlich versetzt, die Flüssigkeitsableitung 60 aus dem Aussenbereich der Austragsvorrichtung 12, wobei ebenfalls zunächst ein Trichter vorgesehen ist, und im übrigen der Aufbau in Zusammenhang mit Figur 1 etwas näher dargestellt ist.

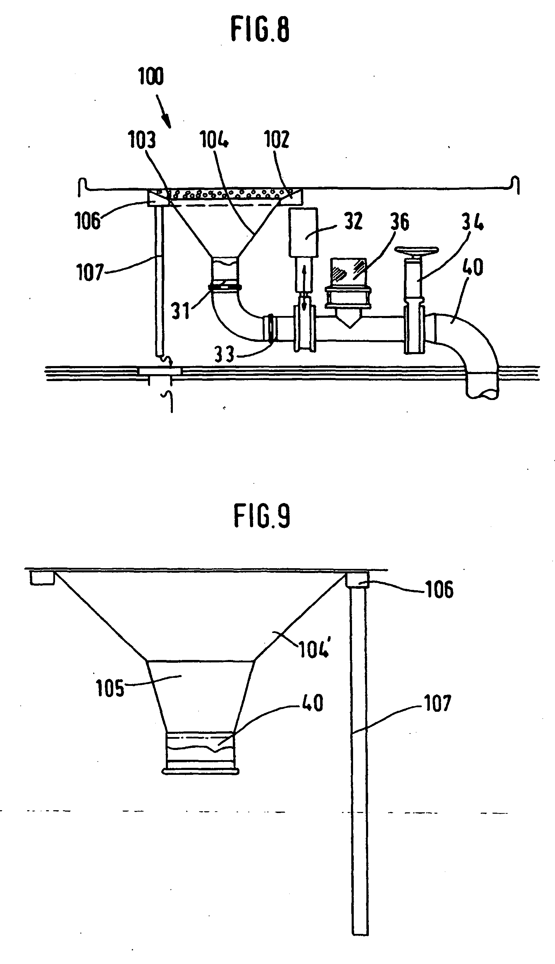

Figur 8 zeigt eine dezentrale Aufgabestation 100 zur Zufuhr des eingegebenen Nassmülls über zyklisch zu öffnende Absperreinrichtungen 32, 34 über das unter Vakuum oder Druckluft stehende Transportrohr 40 zur Austragsvorrichtung 12. Mit 36 ist ein Anschluss angedeutet, von dem Unterdruck/Vakuum oder Druckluft zu Transportzwecken, zu Lüftungszwecken oder zu Reinigungszwecken zugeführt werden kann, 31,33 stellen übliche Rohrverbinder dar.

Das Kernstück der Aufgabestation 100 besteht aus einem Auffangtrichter 104, an den ein äusserer Siebring 102 angrenzt, der leicht abnehmbar auf einer umlaufenden Entwässerungsrinne 106 aufliegt, welche über eine Entwässerung in Form einer Verbindungsleitung 107 direkt mit einer Abflussleitung des Raumes verbunden sein kann. Der Siebring 102 hat nach innen und unten einen Neigungswinkel oder Öffnungswinkel von 20°, der unten abgrenzende Auffangtrichter von vorzugsweise 50° bis 60° zur Horizontalen.

Figur 9 zeigt einen anderen Auffangtrichter der Aufgabestation 100, bestehend aus einem oberen konischen Teiltrichter 104' mit einem Winkel von etwa 40° bis 50° und einem anschließenden unteren Teiltrichter 105 von etwa 70° bis 80° zur Horizontalen, der zum Transportrohr 40 führt.

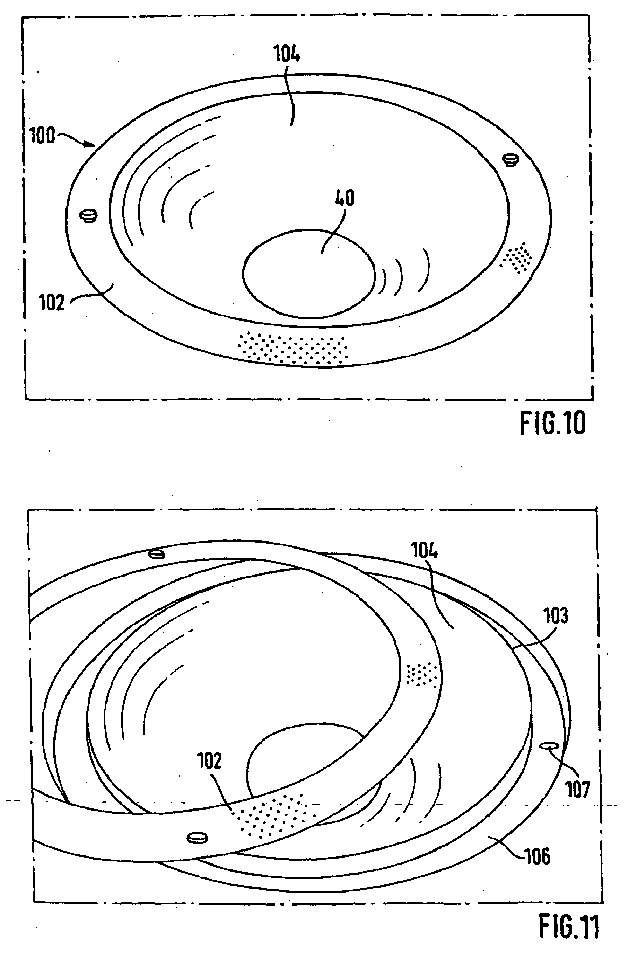

Figur 10 zeigt in perspektivischer Darstellung den Aufgabestation 100 mit äusserem flachen Siebring 102 und dem steileren nach innen anschließenden Auffangtrichter 104, der zum Transportrohr 40 oder gegebenenfalls zunächst zu einem weiteren Teiltrichter, Zwischenrohr, diversen Absperrvorrichtungen etc. führt.

Figur 11 zeigt die Darstellung von Figur 10 mit entferntem äusseren Siebring 102 und darunter sichtbarer umlaufender Entwässerungsrinne 106, die eine Entwässerung 107 aufweist, die vorzugsweise direkt mit der Abwasserleitung verbunden ist.

## Patentansprüche

1. Müllentsorgungsanlage (10) für Nassmüll, insbesondere für Abfälle von Großküchen,
mit einer zentralen Austragsvorrichtung (12),
Aufgabestationen (30,100) zur steuerbaren portionsweisen Zuführung von Nassmüll zur Austragsvorrichtung (12) über Transportrohre (40) und einem Transportlufterzeuger in Form eines Druckluftkompressors oder einer Vakuumpumpe (52) zum Transportieren des Nassmülls zur zentralen Austragsvorrichtung (12), **gekennzeichnet durch** einen siebartigen konischen, als Sieb ausgebildeten vertikalen Auffangtrichter (14) im Gehäuse (18) der Austragsvorrichtung (12), in den der gesamte Nassmüll von den einzelnen Aufgabestationen (30,100) in den oberen Bereich des Auffangtrichters (14) gedrückt wird, einen an den Auffangtrichter (14) angrenzenden äußeren Auffangbereich (19) des Gehäuses (18) für die **durch** den Auffangtrichter (14) hindurch nach außen tretende Flüssigkeit, und eine an den offenen Boden (16) des Auffangtrichters (14) anschließende Austragsleitung für die entwässerten festen Teile, die mit einer Schleusenkammer (72) in Verbindung steht, welche **durch** einen oberen steuerbaren Schieber (74) und einen unteren steuerbaren Schieber (76) zu öffnen und zu verschließen ist, wobei die Schleusenkammer (72) mit einer Leitung zur weiteren Müllentsorgung verbunden ist.

2. Müllentsorgungsanlage (10) nach Anspruch 1, **dadurch gekennzeichnet, dass** der äussere Auffangbereich (19) für die aus dem Auffangtrichter (14) seitlich nach aussen tretende Flüssigkeit durch das Gehäuse (18) der Austragsvorrichtung (12) und eine untere Auffangwanne (20) gebildet ist, an welcher die Flüssigkeitsableitung (60) angeordnet ist.

3. Müllentsorgungsanlage (10) nach einem der Ansprüche 1 oder 2, **gekennzeichnet durch** eine leicht zu öffnende, abdichtende Seitenwand (22) für das Gehäuse (18) der Austragsvorrichtung (12) zum leichten Aus- und Einbringen des Auffangtrichters (14),
- je eine obere (24) und eine untere (26) Einpassvorrichtung an der oberen Wand beziehungsweise dem Boden des Gehäuses (18) für eine präzise Anpassung des oberen Passringes (28) beziehungsweise des unteren Passringes (29) des Auffangtrichters (12).

4. Müllentsorgungsanlage (10) nach einem der Ansprüche 1 bis 3, **dadurch gekennzeichnet, dass** der eingebaute Auffangtrichter (14) durch Klemmvorrichtungen gesichert ist, die ohne Werkzeug von Hand leicht lösbar sind.

5. Müllentsorgungsanlage (10) nach einem der Ansprüche 1 bis 4, **dadurch gekennzeichnet, dass** im Auffangtrichter (14) Filter, Wechselsiebe, Spaltfilter oder dergleichen angeordnet sind.

6. Müllentsorgungsanlage (10) nach einem der Ansprüche 1 bis 5, **dadurch gekennzeichnet, dass** die im äußeren Auffangbereich (19) des Auffangtrichters (14) gesammelte Flüssigkeit über die Flüssigkeitsableitung (60) in steuerbaren Intervallen durch Schwerkraft abläuft, vorzugsweise über eine zwischen zwei Steuerventilen (64, 66) angeordnete Zwischenschleuse (62).

7. Müllentsorgungsanlage (10) nach einem der Ansprüche 1 bis 6, **gekennzeichnet durch** steuerbare obere Reinigungsdüsen am Gehäuse (18) der Austragsvorrichtung (12) für den Auffangtrichter (14) und das gesamte Gehäuse (18).

8. Müllentsorgungsanlage (10) nach einem der Ansprüche 1 bis 7, **dadurch gekennzeichnet, dass** eine tangentiale Einströmung von Luft in die zentrale Austragsvorrichtung (12) vorgesehen ist, derart, dass die Luft zusammen mit dem Nassmüll im siebartigen vertikalen Auffangtrichter (14) rotiert.

9. Müllentsorgungsanlage (10) nach Anspruch 8, **dadurch gekennzeichnet, dass** die Schleusenkammer (72) mit einem Zerkleinerer (80) des weitgehend vorentwässerten Mülls verbunden ist, von welcher er über eine Entwässerungspresse (90) geleitet werden kann, um zu einem Speiserestesilo (94) oder dergleichen abgeführt zu werden, wobei die Restflüssigkeit über eine weitere Entwässerungsleitung (92) der Kanalisation zugeführt werden kann.

10. Müllentsorgungsanlage (10) nach einem der Ansprüche 1 bis 9, **dadurch gekennzeichnet, dass** die Aufgabestation (100) im wesentlichen aus einem konischen Auffangtrichter (104; 104', 105) besteht, an dessen oberen Rand ein äusserer flacher Siebring (102) angrenzt, und wobei der Aufgabetrichter (104; 104', 105) unten in das Transportrohr (40) für den Nassmüll führt.

11. Müllentsorgungsanlage (10) nach Anspruch 10, **dadurch gekennzeichnet, dass** der äussere flache Siebring (102) auf einer Entwässerungsrinne (106) leicht herausnehmbar gehaltert ist beziehungsweise aufliegt, die eine Verbindungsleitung (107) zur Abwasserleitung des Raumes oder dergleichen aufweist.

12. Müllentsorgungsanlage (10) nach Anspruch 11, **dadurch gekennzeichnet, dass** der äussere flache Siebring (102) horizontal angeordnet ist, oder einen Öffnungswinkel von 15° bis 25°, vorzugsweise 20°, zur Horizontale nach innen zu aufweist, und dass der Öffnungswinkel des Auffangtrichters (104) nach innen zu 40° bis 65°, vorzugsweise 50° bis 60°, zur Horizontale beträgt,
derart, dass ein Einfüllen ohne Zugabe von Wasser und ohne Verstopfungsgefahr durch Brückenbildung von größeren Speiseresten, Gemüse etc. ermöglicht wird.

13. Müllentsorgungsanlage (10) nach Anspruch 11, **dadurch gekennzeichnet, dass** der Auffangtrichter aus einem flacheren oberen Teiltrichter (104') von etwa 40° bis 50° und einem angrenzenden unteren Teiltrichter (105) von etwa 70° bis 80° Öffnungswinkel zur Horizontalen besteht.

## Claims

1. A waste disposal device (10) for wet wastes, in particular for wastes from large-scale kitchens, comprising a central discharge device (12), charging stations (30, 100) for controllably feeding wet wastes in portions to the discharge device (12) via transport pipes (40) and a transport air generator in the form of an air compressor or a vacuum pump (52) for transporting the wet wastes to the central discharge device (12), **characterized by** a sieve-like conical vertical collection funnel (14) designed as a sieve in the housing (18) of the discharge device (12), into which the entire wet wastes from the individual charging stations (30, 100) are pressed into the upper area of the collection funnel (14); an outer collection area (19) of the housing (18), located adjacent to the collection funnel (14) for the liquid passing through the collection funnel (14) to the outside; and a discharge pipe attached to the open bottom (16) of the collection funnel (14) for the dewatered solid portions and connected to a lock chamber (72) that is opened and closed by an upper controllable slide gate (74) and a lower controllable slide gate (76), with the lock chamber (72) being connected to a pipe for the further waste disposal.

2. The waste disposal device (10) according to claim 1, **characterized in that** the outer collection area (19) for the liquid laterally passing through the collection funnel (14) to the outside is formed by the housing (18) of the discharge device (12) and a lower collection vat (20) at which the liquid discharge duct (60) is arranged.

3. The waste disposal device (10) according to either of the claims 1 or 2, **characterized by** an easily opened, sealing side wall (22) for the housing (18) of the discharge device (12) for easy removal and insertion of the collection funnel (14),
one upper (24) and one lower (26) fitting device each on the upper wall and the bottom, respectively, of the housing (18), for a precise fit of the upper fitting ring (28) and of the lower fitting ring (29), respectively, of the collection funnel (12).

4. The waste disposal device (10) according to any one of claims 1 to 3, **characterized in that** the installed collection funnel (14) is secured by clamping devices that can be easily released manually without tools.

5. The waste disposal device (10) according to any one of claims 1 to 4, **characterized in that** filters, interchangeable sieves, disk filters or the like are arranged in the collection funnel (14).

6. The waste disposal device (10) according to any one of claims 1 to 5, **characterized in that** the liquid gathered in the outer collection area (19) of the collection funnel (14) runs off by gravity at controllable intervals through the liquid discharge duct (60), preferably via an intermediate lock (62) arranged between two control valves (64, 66).

7. The waste disposal device (10) according to any one of claims 1 to 6, **characterized by** controllable upper cleansing nozzles on the housing (18) of the discharge device (12), for the collection funnel (14) and the entire housing (18).

8. The waste disposal device (10) according to any one of claims 1 to 7, **characterized in that** a tangential inflow of air into the central discharge device (12) is provided, such that the air rotates together with the wet wastes in the sieve-like vertical collection funnel (14).

9. The waste disposal device (10) according to claim 8, **characterized in that** the lock chamber (72) is connected to a chopper (80) of the substantially previously dewatered wastes, from which the wastes can be guided through a dewatering press (90), to be removed to a food residue silo (94) or the like, with the residual liquid being fed into the sewage via an additional drainage duct (92).

10. The waste disposal device (10) according to any one of claims 1 to 9, **characterized in that** the charging station (100) substantially comprises a conical collection funnel (104; 104', 105) bordered at its upper edge by an outer flat sieve ring (102), with the collection funnel (104; 104', 105) leading down into the transport pipe (40) for the wet wastes.

11. The waste disposal device (10) according to claim 10, **characterized in that** the outer flat sieve ring (102) is mounted or lies in an easily removable manner on a drainage channel (106) having a connecting duct (107) to the sewage drain pipe of the room or the like.

12. The waste disposal device (10) according to claim 11, **characterized in that** the outer flat sieve ring (102) is arranged horizontally, or it has an inward opening angle to the horizontal of 15° to 25°, preferably 20°, and that the inward opening angle of the collection funnel (104) is 40° to 65°, preferably 50° to 60°, to the horizontal, such that filling becomes possible without the addition of water and the without risk of clogging up due to bridging of larger pieces of food, vegetables, etc.

13. The waste disposal device (10) according to claim 11, **characterized in that** the collection funnel is comprised of a flatter upper funnel portion (104') with an opening angle of approximately 40° to 50° to the horizontal and an adjoining lower funnel portion (105) with an opening angle of approximately 70° to 80° to the horizontal.

## Revendications

1. Installation d'élimination (10) de déchets humides, notamment de déchets de cuisines de collectivités,
avec un dispositif d'évacuation (12) central,
des postes de dépôt (30, 100) destinés à l'acheminement commandable de portions de déchets humides vers le dispositif d'évacuation (12) par l'intermédiaire d'une tubulure de transport (40) et avec un générateur d'air de transport sous forme de compresseur d'air ou de pompe à vide (52) pour transporter les déchets humides vers le dispositif d'évacuation (12) central, **caractérisée par** une trémie (14) conique verticale sous forme de tamis destinée à recueillir les déchets dans le boîtier (18) du dispositif d'évacuation (12) dans la partie supérieure de laquelle (14) tous les déchets humides sont enfoncés par les différents postes de dépôt (30, 100), par une zone externe (19) du boîtier (18) attenant à la trémie (14) et destinée à recueillir le liquide traversant la trémie (14) et passant à l'extérieur, et par une conduite d'évacuation des solides égouttés raccordée au fond (16) ouvert de la trémie (14), laquelle conduite communique avec un sas (72) qui peut être ouvert et fermé par une vanne supérieure (74) commandable et par une vanne inférieure (76) commandable, lequel sas (72) est relié à une conduite d'évacuation ultérieure des déchets.

2. Installation d'élimination de déchets (10) selon la revendication 1, **caractérisée en ce que** la zone externe (19) destinée à recueillir le liquide sortant latéralement de la trémie (14) est formée par le boîtier (18) du dispositif d'évacuation (12) et par un bac collecteur (20) inférieur sur lequel est disposée la conduite d'évacuation du liquide (60).

3. Installation d'élimination de déchets (10) selon la revendication 1 ou 2, **caractérisée par** une paroi latérale (22) d'étanchéité facile à ouvrir pour le boîtier (18) du dispositif d'évacuation (12), celle-ci permettant de facilement enlever et mettre en place la trémie (14),
- par un dispositif supérieur (24) et un dispositif inférieur (26) d'ajustage sur la paroi supérieure, voire dans le fond du boîtier (18), ces dispositifs permettant l'ajustement précis de l'anneau d'ajustage supérieur (28) voire de l'anneau d'ajustage inférieur (29) de la trémie (14).

4. Installation d'élimination de déchets (10) selon l'une quelconque des revendications 1 à 3, **caractérisée en ce que** la trémie (14) montée est sécurisée par des dispositifs de serrage qui sont faciles à desserrer à la main, sans outil.

5. Installation d'élimination de déchets (10) selon l'une quelconque des revendications 1 à 4, **caractérisée en ce que** des filtres, des tamis interchangeables, des filtres à fente ou similaire sont disposés dans la trémie (14).

6. Installation d'élimination de déchets (10) selon l'une quelconque des revendications 1 à 5, **caractérisée en ce que** le liquide recueilli dans la zone externe (19) de la trémie (14) est évacué par gravité à intervalles réglables par la conduite d'évacuation du liquide (60), de préférence par l'intermédiaire d'un sas intermédiaire (62) interposé entre deux vannes de commande (64, 66).

7. Installation d'élimination de déchets (10) selon l'une quelconque des revendications 1 à 6, **caractérisée par** des gicleurs de nettoyage supérieurs réglables sur le boîtier (18) du dispositif d'évacuation (12) pour la trémie (14) et pour tout le boîtier (18).

8. Installation d'élimination de déchets (10) selon l'une quelconque des revendications 1 à 7, **caractérisée en ce qu'**il est prévu que de l'air entre tangentiellement dans le dispositif d'évacuation (12) central de telle sorte que l'air tourne avec les déchets humides dans la trémie (14) verticale sous forme de tamis.

9. Installation d'élimination de déchets (10) selon la revendication 8, **caractérisée en ce que** le sas (72) est relié à un broyeur (80) des déchets égouttés dans une large mesure depuis lequel ces déchets peuvent être véhiculés au travers d'une presse d'égouttage (90) avant d'être évacués vers un silo de relents (94) ou similaire, le liquide résiduel pouvant être acheminé vers la canalisation par l'intermédiaire d'une autre conduite de drainage (92).

10. Installation d'élimination de déchets (10) selon l'une quelconque des revendications 1 à 9, **caractérisée en ce que** le poste de dépôt (100) est sensiblement constitué d'une trémie (104 ; 104', 105) conique au bord supérieur de laquelle est contigu un tamis annulaire (102) externe plat, la trémie (104 ; 104', 105) débouchant vers le bas dans la tubulure de transport (40) des déchets humides.

11. Installation d'élimination de déchets (10) selon la revendication 10, **caractérisée en ce que** le tamis annulaire (102) externe plat est maintenu ou repose, aisément amovible, sur une gouttière de drainage (106) qui comporte une conduite de liaison (107) avec le conduit d'eaux sales de la pièce ou similaire.

12. Installation d'élimination de déchets (10) selon la revendication 11, **caractérisée en ce que** le tamis annulaire (102) externe plat est disposé horizontalement ou a un angle d'ouverture compris entre 15° et 25°, de préférence de 20°, par rapport à l'horizontale vers l'intérieur, et que l'angle d'ouverture de la trémie (104) vers l'intérieur est compris entre 40° et 65°, de préférence entre 50° et 60° par rapport à l'horizontale,
de manière à permettre le remplissage, sans addition d'eau et sans risque d'engorgement par formation de pont, des relents de taille plus importante, de légumes, etc.

13. Installation d'élimination de déchets (10) selon la revendication 11, **caractérisée en ce que** la trémie est constituée d'une partie supérieure de trémie (104') plus plate d'un angle d'ouverture compris entre environ 40° et 50° et d'une partie inférieure (105) de trémie attenante d'un angle d'ouverture compris entre environ 70° et 80° par rapport à l'horizontale.
